# EUROPÄISCHE PATENTSCHRIFT

(11) **EP 2 702 256 B1**
(45) Veröffentlichungstag und Bekanntmachung des Hinweises auf die Patenterteilung: **08.06.2022**
(21) Anmeldenummer: 12724888.8
(22) Anmeldetag: 26.04.2012
(51) Int. Cl.: F02B 23/10

(54) **VERBRENNUNGSMOTOR UND VERFAHREN ZUM EINSPRITZEN VON KRAFTSTOFF IN EINEN BRENNRAUM EINES VERBRENNUNGSMOTORS**
INTERNAL COMBUSTION ENGINE AND METHOD FOR INJECTING FUEL INTO A COMBUSTION CHAMBER OF AN INTERNAL COMBUSTION ENGINE
MOTEUR À COMBUSTION INTERNE ET PROCÉDÉ D'INJECTION DE CARBURANT DANS UNE CHAMBRE DE COMBUSTION D'UN MOTEUR À COMBUSTION INTERNE

(30) Priorität: 29.04.2011 DE 102011018949; 20.03.2012 DE 102012005456
(43) Veröffentlichungstag der Anmeldung: 05.03.2014
(73) Patentinhaber: Volkswagen Aktiengesellschaft, 38436 Wolfsburg (DE)
(72) Erfinder: SCHINTZEL, Kay, 38162 Destedt (DE); HENTSCHEL, Lars, 38126 Braunschweig (DE); THEOBALD, Jörg, 38165 Lehre (DE); THAYSEN, Andreas, 38442 Wolfsburg (DE); EBUS, Feitse, 38108 Braunschweig (DE)
(74) Vertreter: Gulde & Partner
(86) Internationale Anmeldenummer: PCT/EP2012/001790
(87) Internationale Veröffentlichungsnummer: WO 2012/146378

(56) Entgegenhaltungen:
- WO-A1-02/02928
- WO-A1-2005/075815
- AT-A2- 508 578
- JP-A- 2003 269 176
- US-A1- 2006 207 550
- US-A1- 2009 064 964
- US-A1- 2011 162 621
- US-B1- 7 418 940
- US-B2- 6 883 491
- US-B2- 7 770 556

## Beschreibung

Die vorliegende Erfindung betrifft ein Verfahren, um gezielt Kraftstoff in einen Brennraum eines Zylinders eines Verbrennungsmotors eines Fahrzeugs einzuspritzen.

Das Einspritzen von Kraftstoff in einen Brennraum mit mehreren Strahlen ist nach dem Stand der Technik gut bekannt, siehe beispielsweise DE 100 32 330 A1, DE 10 2004 041 031 A1, DE 10 2004 002 296 A1, US 7,770,556 B2, US 2009/064 964 A1, US 6 883 491 B2 oder JP 2007092633 A.

Dabei wird das Einspritzen des Kraftstoffs nach dem Stand der Technik derart durchgeführt, dass die Zündkerze und die Ventile des Zylinders möglichst nicht von dem eingespritzten Kraftstoff benetzt werden (siehe insbesondere DE 100 32 330 A1, DE 10 2004 041 031 A1 und DE 10 2004 002 296 A1). Auch das Problem der Wandbenetzung beim Einspritzen des Kraftstoffs wird in den Druckschriften DE 10 2004 041 031 A1 und in der DE 10 2004 002 296 A1 thematisiert.

Aus der US 2006/0207550 A1 ist ein Verbrennungsmotor bekannt, bei dem ein erster Injektor Kraftstoff in das Saugrohr und jeweils ein zweiter Injektor Kraftstoff direkt in den Brennraum eines Zylinders einspritzt. Dabei ist vorgesehen, dass der Kraftstoff dem direkt einspritzenden Injektor mit einem von der angeforderten Last abhängigen Druck zugeführt wird, was zur Ausbildung unterschiedlicher Einspritzstrahlen des Kraftstoffs führt. Bei hoher Lastanforderung und hohem Kraftstoffdruck sind die aus den zwei schlitzförmigen Injektoröffnungen des direkt einspritzenden Injektors austretenden Einspritzstrahlen jeweils von der Seite gesehen fächerförmig mit, vom Brennraumdach aus gesehen, fast strichförmiger Ausprägung, wobei die beiden Einspritzstrahlen ein "V" mit einem inneren Winkel von zwischen 40° und 50° ausbilden. Dabei liegt eine Zündkerze, wiederum vom Brennraumdach aus gesehen, zwischen den zwei Schenkeln des "V". Bei niedriger Lastanforderung und niedrigem Kraftstoffdruck weisen die Einspritzstrahlen auch vom Brennraumdach aus gesehen eine Fächerform auf, wobei diese im Bereich der Zündkerze überschneiden. Dadurch soll bei geringer Last die Zündwilligkeit des Kraftstoff-Luft-Gemisches verbessert werden.

Aus der WO 02/02928 A1 ist ein zum direkten Einspritzen von Kraftstoff in einen Brennraum eines Verbrennungsmotors vorgesehener Injektor bekannt, der eine Mehrzahl von Einspritzöffnung ausbildet, von denen eine zentrale Einspritzöffnung von äußeren Einspritzöffnungen in einer oder zwei Ringreihen umgeben ist. Dabei sind die Mittellängsachsen der äußeren Einspritzöffnungen schräg bezüglich der Mittellängsachse der zentralen Einspritzöffnung angeordnet, wodurch die Einspritzstrahlen einen Einspritzkegel ausbilden. Bei einer Ausführung des Injektors mit der Anordnung der äußeren Einspritzöffnungen in zwei Ringreihen sollen die Winkel zwischen der Mittellängsachse der zentralen Einspritzöffnung einerseits und den Mittellängsachsen der Einspritzöffnungen der inneren Ringreihe andererseits zwischen 13° und 27° betragen. Die Winkel zwischen der Mittellängsachse der zentralen Einspritzöffnung einerseits und den Mittellängsachsen der Einspritzöffnungen der äußeren Ringreihe andererseits sollen zwischen 22° und 48° betragen. Durch die spezifische Anordnung der Einspritzöffnungen des Injektors soll eine Gemischwolke in dem Brennraum erzeugt werden können, die einen stöchiometrischen oder leicht fetten Kern und eine magere Hülle aufweist.

Aus der US 7,770,556 B2 ist ein zum direkten Einspritzen von Kraftstoff in einen Brennraum eines Verbrennungsmotors vorgesehener Injektor bekannt, der sechs Einspritzöffnung ausbildet, die in einer Ringreihe um eine Mittellängsachse herum angeordnet sind. Dabei ist der Neigungswinkel, den die Mittellängsachsen der Einspritzöffnungen jeweils mit der Mittellängsachse des Injektors einschließen, unterschiedlich. Dabei soll der Winkel zwischen den Mittellängsachsen jeweils benachbarter Einspritzöffnungen 20° oder mehr betragen. Durch die spezifische Anordnung der Einspritzöffnungen soll ein kostengünstig herstellbarer Injektor ausgebildet werden, der bei einer Späteinspritzung in einer Warmlaufphase des Verbrennungsmotors eine Konzentration des eingespritzten Kraftstoffs im Bereich der Zündkerze gewährleisten soll, ohne dabei im Betrieb des Verbrennungsmotors nach dem Erreichen des Betriebstemperaturbereichs eine nachteilige Zylinderbenetzung mit Kraftstoff zu bewirken.

Ein Injektor, mittels dem Kraftstoff über sechs Einspritzöffnungen in einen Brennraum eines Verbrennungsmotors eingespritzt wird, ist auch aus der US 7,418,940 B1 bekannt.

Ausgehend von diesem Stand der Technik stellt sich die vorliegende Erfindung die Aufgabe, den Kraftstoff in Form von mehreren Strahlen derart in den Brennraum einzuspritzen, dass möglichst
- keine Benetzung der Lauffläche des Zylinders auftritt,
- keine Ventilteller von in den Zylinder hineinragenden Ventilen benetzt werden,
- der Kolben nicht benetzt wird, und
- das Brennraumdach nicht benetzt wird.

Erfindungsgemäß wird diese Aufgabe durch ein Verfahren zum Einspritzen von Kraftstoff in einen Brennraum eines Zylinders eines Verbrennungsmotors eines Fahrzeugs nach Anspruch 1 und durch einen Verbrennungsmotor nach Anspruch 5 und durch ein Fahrzeug mit dem Verbrennungsmotor nach Anspruch 7 gelöst. Die abhängigen Ansprüche definieren bevorzugte und vorteilhafte Ausführungsformen der vorliegenden Erfindung.

Im Rahmen der vorliegenden Erfindung wird ein Verfahren zum Einspritzen von Kraftstoff in den Brennraum eines Zylinders des Verbrennungsmotors eines Fahrzeugs bereitgestellt. Dabei wird der Kraftstoff mittels eines Injektors in Form von genau fünf Strahlen in den Brennraum eingespritzt.

Eine erste Ebene ist derart definiert, dass sowohl die Mittelachse des Injektors als auch die Mittelachse des Zylinders in dieser ersten Ebene liegen, die erste Ebene also von der Mittelachse des Injektors und der Mittelachse des Zylinders aufgespannt wird.

Eine zweite Ebene welche senkrecht zu der ersten Ebene liegt, ist derart definiert, dass in dieser zweiten Ebene sowohl die Mittelachse des Injektors als auch die Flächennormale der ersten Ebene liegen, so dass diese zweite Ebene durch die Mittelachse des Injektors und durch die Flächennormale der ersten Ebene aufgespannt wird.

Um eine Spraygeometrie (bestimmte Anordnung der Einspritzstrahlen) zu bestimmen, wurden zahlreiche Simulationen und Experimente durchgeführt, die zum einen die vorab definierten Aufgaben möglichst optimal erfüllen und zum anderen ein Kraftstoff-Luft-Gemisch innerhalb des Zylinders erzeugen, wobei das Volumen des Brennraums dennoch optimal ausgenutzt wird.

Das Ergebnis der Simulationen und Experimente ist eine bestimmte Spraygeometrie mit fünf Löchern einer Lochanordnung eines Injektors.

Um eine Spraygeometrie zu definieren, wird jeder Strahl (und damit jedes Loch der Lochanordnung des Injektors) über einen ersten Winkel und über einen zweiten Winkel definiert. Dabei liegt der erste Winkel zwischen einer Projektion der Mittelachse des jeweiligen Strahls in die zweite Ebene und der Mittelachse des Injektors. Der zweite Winkel liegt zwischen der Projektion der Mittelachse des jeweiligen Strahls in die erste Ebene und der Mittelachse des Injektors.

Bei der Spraygeometrie mit genau fünf Löchern wird der Kraftstoff (insbesondere gleichzeitig) mit genau fünf Strahlen in den Brennraum gespritzt, so dass ein erster, ein zweiter, ein dritter, ein vierter und ein fünfter Strahl existieren. Tabelle 1 stellt nachfolgend dar, wo sich die einzelnen Strahlen der erfindungsgemäßen optimalen 5-Loch-Anordnung im Bezug zu der Mittelachse des Injektors jeweils befinden.

**Tabelle 1: optimale 5-Loch-Anordnung**

| | erster Winkel (α) | | zweiter Winkel (β) | |
|---|---|---|---|---|
| | optimal | Toleranzbereich | optimal | Toleranzbereich |
| 1. Strahl | 0° | -3° bis +3° | 0° | -3° bis +3° |
| 2. Strahl | -28° | -40° bis -20° | -28° | -40° bis -20° |
| 3. Strahl | -10° | -20° bis -5° | -25° | -40° bis -20° |
| 4. Strahl | +10° | +5° bis +20° | -25° | -40° bis -20° |
| 5. Strahl | +28° | +20° bis +40° | -28° | -40° bis -20° |

Vorteilhafterweise gilt für jedes Strahlenpaar, dass ein Mindestwinkel zwischen den beiden Mittelachsen der zwei Strahlen des Strahlenpaars größer als 15° (besser 20°) ist.

Es sei darauf hingewiesen, dass dieser Winkel von mehr als 15° (besser 20°) nicht auf die erste oder zweite Ebene beschränkt ist, sondern dass dieser einzuhaltende Winkel für diejenige Ebene gilt, welche von den beiden Mittelachsen der jeweiligen beiden Strahlen aufgespannt wird.

Indem der genannte Mindestwinkel eingehalten wird, wird in vorteilhafterweise dafür gesorgt, dass zwei benachbarte Strahlen nicht derart dicht beieinander liegen, sodass sich ihre Strahlen verstärken. Würden nämlich zwei Strahlen zu dicht beieinander liegen, wäre in nachteiliger Weise eine Penetration der entsprechenden Kraftstoffstrahlen zu groß, so dass der Kraftstoff zu weit in den Brennraum gespritzt würde, so dass er beispielsweise die Zylinderlauffläche benetzen könnte.

Gemäss einer Ausführungsform werden die Strahlen mit einem Druck von mehr als 200 bar (besser mehr als 250 bar) in den Brennraum eingespritzt. Darüber hinaus kann zum Betrieb des Verbrennungsmotors ein spezielles Einspritztiming eingesetzt werden, wobei die Einspritzstrahlen abhängig von der Kolbenstellung und der Stellung des Einlassventils (des Hubs des Einlassventils) eingespritzt werden.

Durch den hohen Einspritzdruck von 200 bar (oder gar 250 bar) wird in vorteilhafterweise eine Benetzung des Kolbens oder des Einlassventils vermieden und auch eine Partikelemission (im Abgas) reduziert. Die vorliegende Erfindung bietet aufgrund der seitlichen Einspritzlage ebenfalls die Möglichkeit, Common-Rail-Injektoren mit Einspritzdrücken bis zu 800 bar einzusetzen, welche beispielsweise für den Dieselmotor bekannt sind.

Darüber hinaus ist erfindungsgemäß eine Mehrfacheinspritzung möglich, was bedeutet, dass jeder der fünf Strahlen im selben Arbeitstakt mehrfach eingespritzt wird.

Durch die Mehrfacheinspritzung werden die Verdampfung und die Gemischbildung im Zylinder weiter optimiert, wodurch insbesondere das Kaltstart- und Emissionsverhalten verbessert wird.

Im Rahmen der vorliegenden Erfindung wird ein Kraftstoffeinspritzsystem zum Einspritzen von Kraftstoff in einen Brennraum eines Zylinders eines Verbrennungsmotors eines Fahrzeugs bereitgestellt.

Dabei umfasst die Kraftstoffeinspritzvorrichtung einen Injektor mit einer Lochanordnung (zum Beispiel eine Fläche), welche genau fünf durch die Lochanordnung beziehungsweise Fläche hindurch verlaufende Löcher aufweist.

Es ist vorgesehen, dass der Injektor den Kraftstoff durch die fünf Löcher der Lochanordnung hindurch in den Brennraum einspritzt. Wird durch ein Loch der Lochanordnung hindurch mittels des Injektors ein Kraftstoffstrahl in den Brennraum gespritzt, so entspricht die Mittelachse dieses Loches insbesondere der Mittelachse dieses Strahls. Daher entspricht die Richtung der Mittelachse des jeweiligen Loches der Richtung der Mittelachse des durch das Loch erzeugbaren Strahls. Die Spraygeometrie der Lochanordnung entspricht derjenigen, die bezüglich des erfindungsgemäßen Verfahrens in der Tabelle 1 angegeben ist.

Durch die vorliegende Erfindung wird der Kraftstoff derart in den Brennraum eingespritzt, dass weder die Zylinderlauffläche noch das Brennraumdach noch der Kolben von dem eingespritzten Kraftstoff benetzt werden. Dies führt in vorteilhafterweise zu einer Reduktion der Partikelemissionen, zu einer Vermeidung von Verkokungen, zu einer Vermeidung von einer Schmierölverdünnung und zu einer Erhöhung der Brenngeschwindigkeit des sich im Brennraum bildenden Kraftstoff-Luft-Gemisches. Anders ausgedrückt ist das erfindungsgemäße Spraybild der Hochdruck-Einspritzventile (Hochdruck-Injektoren) bzw. die Anordnung der einzelnen Einspritzstrahlen so ausgelegt, dass eine Kraftstoffbenetzung der Einlassventile, des Kolbens und der Zylinderlaufbuchsen mittels spezieller Hochdruck-Einspritzventil-Auslegung und einer sehr hohen Ladungsbewegung ohne Klappensystem im Einlasskanal vermieden wird.

Durch die vorliegende Erfindung werden die in der Nähe der Zylinderwand vorhandenen Kohlenwasserstoffe reduziert ("Wall-Quenching") und somit die Schadstoffemissionen deutlich abgesenkt. Dies resultiert nicht zuletzt aus einer deutlichen Reduktion der Penetration der Kraftstoffstrahlen. Um die Partikelemissionen weiter zu reduzieren, kann eine Kombination aus Saugrohr- und Direkteinspritzung realisiert werden. Darüber hinaus ist es möglich, den Verbrennungsmotor mit einem Einlass- und mit einem Auslassnockenwellensteller zu realisieren, um größtmögliche Überschneidungen realisieren zu können und somit das Drehmoment bei kleineren Drehzahlen ("Low End Torque") zu verbessern und den Kraftstoffverbrauch und die Schadstoffemissionen (insbesondere Partikelemissionen und Emissionen von Kohlenwasserstoffen) abzusenken. Die Erhöhung der Ladungsbewegung resultiert in einer Erhöhung der turbulenten kinetischen Energie im Zylinder des Verbrennungsmotors. Ein weiterer Vorteil der vorliegenden Erfindung ergibt sich durch die Reduzierung der Ablagerungen auf Kolben und Brennraumdach, was wiederum zur Reduzierung der Partikelemissionen beiträgt.

Die vorliegende Erfindung ist insbesondere für einen Ottomotor eines Kraftfahrzeugs geeignet. Selbstverständlich ist die vorliegende Erfindung nicht auf diesen bevorzugten Anwendungsbereich eingeschränkt, da die vorliegende Erfindung auch bei Schiffen, Flugzeugen sowie gleisgebundenen oder spurgeführten Fahrzeugen einsetzbar ist. Darüber hinaus ist die vorliegende Erfindung zumindest prinzipiell auch bei anderen Motortypen einsetzbar.

Im Folgenden wird die vorliegende Erfindung anhand erfindungsgemäßer Ausführungsformen mit Bezug zu den Figuren im Detail beschrieben.

In Fig. 1 ist das Innere eines Zylinders eines Ottomotors dargestellt.

In Fig. 2 ist die Ausrichtung der Einspritzstrahlen eines Injektors mit erfindungsgemäßer 5-LochAnordnung dargestellt.

Fig. 3 stellt schematisch ein erfindungsgemäßes Fahrzeug mit einem erfindungsgemäßen Verbrennungsmotor dar.

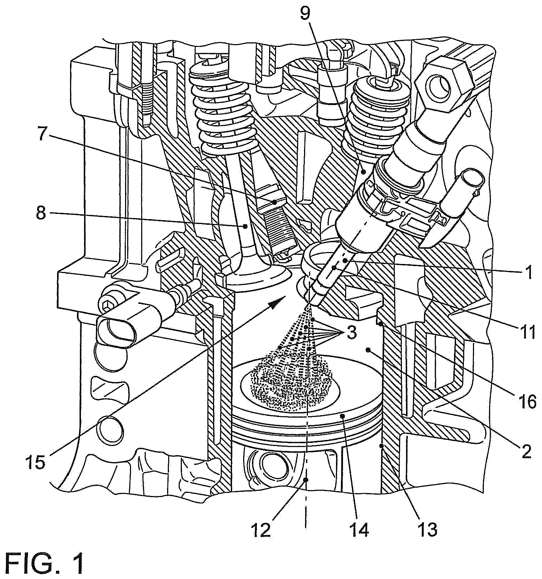

In Fig. 1 ist ein Brennraum 2 im Inneren eines Zylinders 13 eines Ottomotors dargestellt. Innerhalb des Zylinders 13 bewegt sich ein Kolben 14, wobei sich dem Kolben 14 gegenüber das so genannte Brennraumdach 15 befindet. In den Zylinder 13 und damit in den Brennraum 2 hinein ragen ein Einlassventil 8, ein Auslassventil 9, eine Zündkerze 7 und ein Injektor 1. Anhand der Tatsache, dass die Mittelachse 11 des Injektors 1 zu der Mittelachse 12 des Zylinders 13 einen Winkel aufweist, erkennt man, dass der Kraftstoff seitlich schräg in den Zylinder 13 eingespritzt wird. Unterhalb des Brennraumdachs befindet sich eine so genannte Schnaupe bzw. Unterkante des Brennraumdaches (eine entsprechenden Aussparung zur Montage des Injektors 1). Im Betrieb spritzt der Injektor 1 Kraftstoffstrahlen 3 in den Brennraum 2.

Diese Kraftstoffstrahlen 3 entstehen, indem der Kraftstoff durch entsprechende Löcher einer Lochanordnung gespritzt wird. Stellt man sich diese Lochanordnung als eine Oberfläche eines Segments einer Kugel dar, dann bildet die Mittelachse jedes Loches, welche beispielsweise einer Geraden entspricht, die durch den Mittelpunkt der entsprechenden Kugel und durch den Mittelpunkt des entsprechenden Lochs verläuft, eine Beziehung zu der Mittelachse 11 des Injektors 1, was durch den ersten Winkel α und durch den zweiten Winkel β ausgedrückt werden kann.

Dazu existieren eine erste und eine zweite Ebene. Die erste Ebene wird von der Mittelachse 11 des Injektors 1 und von der Mittelachse 12 des Zylinders 13 aufgespannt. Die zweite Ebene steht senkrecht auf der ersten Ebene und beinhaltet die Mittelachse 1 des Injektors 1, so dass die Mittelachse 11 des Injektors 1 sowohl innerhalb der ersten als auch innerhalb der zweiten Ebene liegt. Der erste Winkel α entspricht einem Winkel in der zweiten Ebene, und der zweite Winkel β entspricht einem Winkel in der ersten Ebene. Die Mittelachse eines Loches der Lochanordnung entspricht der Mittelachse desjenigen Strahls, welcher durch dieses Loch hindurch in den Brennraum 2 eingespritzt wird. Jedes Loch und damit jeder Strahl wird durch den ersten Winkel α und durch den zweiten Winkel β definiert. Der erste Winkel α gibt dabei an, wie groß der Winkel zwischen der Mittelachse 11 des Injektors 1 und der Projektion der Mittelachse des jeweiligen Loches (Strahls) in der zweiten Ebene ist. In ähnlicher Weise gibt der zweite Winkel β an, wie groß der Winkel zwischen der Mittelachse 11 des Injektors 1 und der Projektion der Mittelachse des jeweiligen Loches (Strahls) in der ersten Ebene ist.

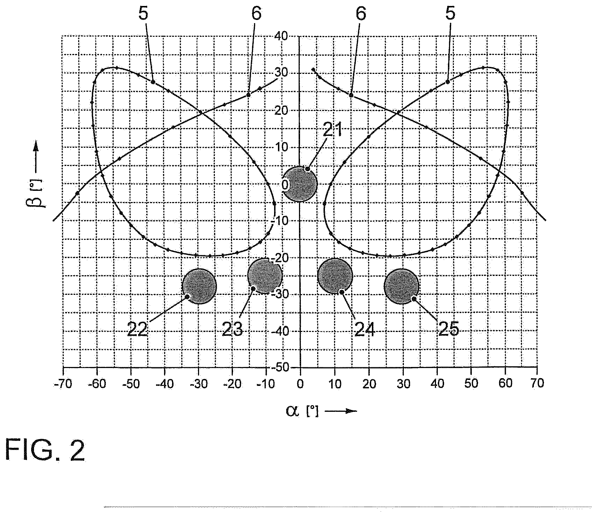

In Fig. 2 ist die Ausrichtung der fünf Strahlen 21-25 der 5-Loch-Anordnung dargestellt. Zusätzlich ist in Fig. 2 die Ventilhubkurve 5 jeweils für das Einlassventil 8 und das Ausmaßventil 9 dargestellt. Damit der jeweilige Strahl 21-25 zu keinem Zeitpunkt eines der Ventile 8, 9 (oder besser den Ventilteller eines der Ventile 8, 9) trifft, liegt der entsprechende Strahl 21-25 außerhalb der geschlossenen Ventilhubkurve 5, was bei der erfindungsgemäßen in Fig. 2 dargestellten Spraygeometrie der Fall ist.

Darüber hinaus trifft keiner der Strahlen 21-25 die Unterkante des Brennraumdaches 15 (Schnaupe). Dazu liegen die Strahlen 21-25 unterhalb der Kurve 6, welche den Verlauf der Unterkante des Brennraumdaches 15 darstellt, was ebenfalls bei der erfindungsgemäßen in Fig. 2 dargestellten Spraygeometrie der Fall ist.

Der Durchmesser eines der Strahlen 21-25 beträgt beispielsweise 150 µm.

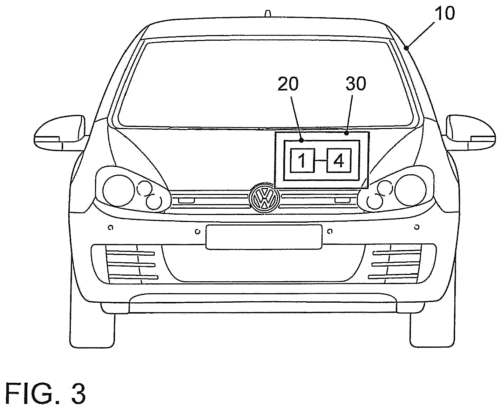

Schließlich ist in Fig. 3 ein erfindungsgemäßes Fahrzeug 10 schematisch dargestellt. Das Fahrzeug 10 umfasst einen Ottomotor 30, welcher eine Einspritzvorrichtung 20 aufweist. Diese Einspritzvorrichtung 20 umfasst ihrerseits einen Injektor 1 mit der erfindungsgemäßen 5-LochAnordnung 4.

## Patentansprüche

1. Verfahren zum Einspritzen von Kraftstoff in einen Brennraum (2) eines Zylinders (13) eines Verbrennungsmotors (30) eines Fahrzeugs (10),
- wobei der Kraftstoff mit genau fünf Strahlen (3) mittels eines Injektors (1) in den Brennraum (2) eingespritzt wird,
- wobei eine erste Ebene definiert ist, in welcher sowohl die Mittelachse (11) des Injektors (1) als auch die Mittelachse (12) des Zylinders (13) liegen, und
- wobei eine zweite Ebene definiert ist, in welcher sowohl die Mittelachse (11) des Injektors (1) als auch die Flächennormale der ersten Ebene liegen,
wobei eine Richtung jeder der Strahlen (3)
• durch einen ersten Winkel (α) zwischen der Mittelachse (11) des Injektors (1) und einer Projektion der Mittelachse des jeweiligen Strahls (3) in die zweite Ebene, und
• durch einen zweiten Winkel (β) zwischen der Mittelachse (11) des Injektors (1) und einer Projektion der Mittelachse des jeweiligen Strahls (3) in die erste Ebene definiert ist,
- wobei die Strahlen (3) einen ersten, einen zweiten, einen dritten, einen vierten und einen fünften Strahl umfassen, wobei
- der erste Winkel (α) des ersten Strahls (21) in einem Winkelbereich von -3° bis +3° liegt und
- der zweite Winkel (β) des ersten Strahls (21) in einem Winkelbereich von -3° bis +3° liegt und
- der erste Winkel (α) des zweiten Strahls (22) in einem Winkelbereich von -40° bis -20° liegt und
- dass der zweite Winkel (β) des zweiten Strahls (22) in einem Winkelbereich von -40° bis -20° liegt und
- der erste Winkel (α) des dritten Strahls (23) in einem Winkelbereich von -20° bis -5° liegt und
- der zweite Winkel (β) des dritten Strahls (23) in einem Winkelbereich von -40° bis -20° liegt und
- der erste Winkel (α) des vierten Strahls (24) in einem Winkelbereich von +5° bis +20° liegt und
- der zweite Winkel (β) des vierten Strahls (24) in einem Winkelbereich von -40° bis -20° liegt und
- der erste Winkel (α) des fünften Strahls (25) in einem Winkelbereich von +20° bis +40° liegt und
- der zweite Winkel (β) des fünften Strahls (25) in einem Winkelbereich von -40° bis -20° liegt,
wobei alle Strahlen (21-25) außerhalb des in die Ebenen projizierten Verlaufes einer Ventilhubkurve (5) und unterhalb des in die Ebenen projizierten Verlaufes einer Kurve (6) der Unterkante eines Brennraumdaches (15) liegen.

2. Verfahren nach Anspruch 1,
**dadurch gekennzeichnet,**
**dass** die Strahlen (3) derart erzeugt werden, dass für jedes Strahlenpaar, welches aus zwei der Strahlen (3) gebildet wird, ein Winkel zwischen den beiden Mittelachsen der zwei Strahlen des Strahlenpaars größer als 15° ist.

3. Verfahren nach einem der vorherigen Ansprüche,
**dadurch gekennzeichnet,**
**dass** die Strahlen (3) mit einem Druck von mehr als 200 bar in den Brennraum (2) gespritzt werden.

4. Verfahren nach einem der vorhergehenden Ansprüche,
**dadurch gekennzeichnet,**
**dass** die Strahlen (3) in demselben Arbeitstakt mehrfach eingespritzt werden.

5. Verbrennungsmotor (30) eines Fahrzeugs (10) mit einem Injektor (1) zum Einspritzen von Kraftstoff in einen Brennraum (2) eines Zylinders (13) des Verbrennungsmotors (30),
- wobei der Injektor (1) Kraftstoff durch genau fünf Löcher einer Lochanordnung (4) des Injektors (4) in den Brennraum (2) spritzt,
- wobei eine erste Ebene definiert ist, in welcher sowohl die Mittelachse (11) des Injektors (1) als auch die Mittelachse (12) des Zylinders (13) liegen, und
- wobei eine zweite Ebene definiert ist, in welcher sowohl die Mittelachse (11) des Injektors (1) als auch die Flächennormale der ersten Ebene liegen,
wobei eine Richtung jeder der Strahlen (3)
• durch einen ersten Winkel (α) zwischen der Mittelachse (11) des Injektors (1) und einer Projektion der Mittelachse des jeweiligen Strahls (3) in die zweite Ebene, und
• durch einen zweiten Winkel (β) zwischen der Mittelachse (11) des Injektors (1) und einer Projektion der Mittelachse des jeweiligen Strahls (3) in die erste Ebene definiert ist,
- wobei die Strahlen (3) einen ersten, einen zweiten, einen dritten, einen vierten und einen fünften Strahl umfassen, wobei
- der erste Winkel (α) des ersten Strahls (21) in einem Winkelbereich von -3° bis +3° liegt und
- der zweite Winkel (β) des ersten Strahls (21) in einem Winkelbereich von -3° bis +3° liegt und
- der erste Winkel (α) des zweiten Strahls (22) in einem Winkelbereich von -40° bis -20° liegt und
- dass der zweite Winkel (β) des zweiten Strahls (22) in einem Winkelbereich von -40° bis -20° liegt und
- der erste Winkel (α) des dritten Strahls (23) in einem Winkelbereich von -20° bis -5° liegt und
- der zweite Winkel (β) des dritten Strahls (23) in einem Winkelbereich von -40° bis -20° liegt und
- der erste Winkel (α) des vierten Strahls (24) in einem Winkelbereich von +5° bis +20° liegt und
- der zweite Winkel (β) des vierten Strahls (24) in einem Winkelbereich von -40° bis -20° liegt und
- der erste Winkel (α) des fünften Strahls (25) in einem Winkelbereich von +20° bis +40° liegt und
- der zweite Winkel (β) des fünften Strahls (25) in einem Winkelbereich von -40° bis -20° liegt,
wobei alle Strahlen (21-25) außerhalb des in die Ebenen projizierten Verlaufes einer Ventilhubkurve (5) und unterhalb des in die Ebenen projizierten Verlaufes einer Kurve (6) der Unterkante eines Brennraumdaches (15) liegen.

6. Verbrennungsmotor (30) nach Anspruch 5, **dadurch gekennzeichnet, dass** eine Richtung der Mittelachse jedes der Löcher eine Richtung der Mittelachse des durch das Loch erzeugbaren Strahls bestimmt.

7. Fahrzeug (10) mit einem Verbrennungsmotor (30) nach Anspruch 5 oder Anspruch 6.

## Claims

1. Method for injecting fuel into a combustion chamber (2) of a cylinder (13) of an internal combustion engine (30) of a vehicle (10),
- wherein the fuel is injected with exactly five jets (3) into the combustion chamber (2) by means of injector (1),
- wherein a first plane is defined in which both the central axis (11) of the injector (1) and the central axis (12) of the cylinder (13) lie, and
- wherein a second plane is defined in which both the central axis (11) of the injector (1) and the surface normal of the first plane lie,
wherein a direction of each of the jets (3) is defined
• by a first angle (α) between the central axis (11) of the injector (1) and a projection of the central axis of the respective jet (3) into the second plane, and
• by a second angle (β) between the central axis (11) of the injector (1) and a projection of the central axis of the respective jet (3) into the first plane,
- wherein the jets (3) comprise a first, a second, a third, a fourth and a fifth jet, wherein
- the first angle (α) of the first jet (21) lies in an angle range from -3° to +3° and
- the second angle (β) of the first jet (21) lies in an angle range from -3° to +3° and
- the first angle (α) of the second jet (22) lies in an angle range from -40° to -20° and
- the second angle (β) of the second jet (22) lies in an angle range from -40° to -20° and
- the first angle (α) of the third jet (23) lies in an angle range from -20° to -5° and
- the second angle (β) of the third jet (23) lies in an angle range from -40° to -20° and
- the first angle (α) of the fourth jet (24) lies in an angle range from +5° to +20° and
- the second angle (β) of the fourth jet (24) lies in an angle range from -40° to -20° and
- the first angle (α) of the fifth jet (25) lies in an angle range from +20° to +40° and
- the second angle (β) of the fifth jet (25) lies in an angle range from -40° to -20°,
wherein all jets (21-25) lie outside the profile, projected into the planes, of a valve lift curve (5) and below the profile, projected into the planes, of a curve (6) of the lower edge of a combustion chamber roof (15).

2. Method according to Claim 1,
**characterized**
**in that** the jets (3) are generated such that, for each jet pair that is formed from two of the jets (3), an angle between the two central axes of the two jets of the jet pair is greater than 15°.

3. Method according to any one of the preceding claims,
**characterized**
**in that** the jets (3) are injected with a pressure of more than 200 bar into the combustion chamber (2) .

4. Method according to any one of the preceding claims,
**characterized**
**in that** the jets (3) are injected multiple times in the same working stroke.

5. Internal combustion engine (30) of a vehicle (10) having an injector (1) for injecting fuel into a combustion chamber (2) of a cylinder (13) of the internal combustion engine (30),
- wherein the injector (1) sprays fuel through exactly five holes of a hole arrangement (4) of the injector (4) into the combustion chamber (2),
- wherein a first plane is defined in which both the central axis (11) of the injector (1) and the central axis (12) of the cylinder (13) lie, and
- wherein a second plane is defined in which both the central axis (11) of the injector (1) and the surface normal of the first plane lie,
wherein a direction of each of the jets (3) is defined
• by a first angle (α) between the central axis (11) of the injector (1) and a projection of the central axis of the respective jet (3) into the second plane, and
• by a second angle (β) between the central axis (11) of the injector (1) and a projection of the central axis of the respective jet (3) into the first plane,
- wherein the jets (3) comprise a first, a second, a third, a fourth and a fifth jet, wherein
- the first angle (α) of the first jet (21) lies in an angle range from -3° to +3° and
- the second angle (β) of the first jet (21) lies in an angle range from -3° to +3° and
- the first angle (α) of the second jet (22) lies in an angle range from -40° to -20° and
- the second angle (β) of the second jet (22) lies in an angle range from -40° to -20° and
- the first angle (α) of the third jet (23) lies in an angle range from -20° to -5° and
- the second angle (β) of the third jet (23) lies in an angle range from -40° to -20° and
- the first angle (α) of the fourth jet (24) lies in an angle range from +5° to +20° and
- the second angle (β) of the fourth jet (24) lies in an angle range from -40° to -20° and
- the first angle (α) of the fifth jet (25) lies in an angle range from +20° to +40° and
- the second angle (β) of the fifth jet (25) lies in an angle range from -40° to -20°,
wherein all jets (21-25) lie outside the profile, projected into the planes, of a valve lift curve (5) and below the profile, projected into the planes, of a curve (6) of the lower edge of a combustion chamber roof (15).

6. Internal combustion engine (30) according to Claim 5, **characterized in that** a direction of the central axis of each of the holes determines a direction of the central axis of the jet that can be generated by the hole.

7. Vehicle (10) having an internal combustion engine (30) according to Claim 5 or Claim 6.

## Revendications

1. Procédé d'injection de carburant dans une chambre de combustion (2) d'un cylindre (13) d'un moteur à combustion interne (30) d'un véhicule (10),
- le carburant étant injecté dans la chambre de combustion (2) avec exactement cinq jets (3) au moyen d'un injecteur (1),
- un premier plan étant défini, dans lequel se situent à la fois l'axe central (11) de l'injecteur (1) et l'axe central (12) du cylindre (13), et
- un deuxième plan étant défini, dans lequel se situent à la fois l'axe central (11) de l'injecteur (1) et la normale au premier plan,
une direction de chacun des jets (3) étant définie
- par un premier angle (α) entre l'axe central (11) de l'injecteur (1) et une projection de l'axe central du jet respectif (3) dans le deuxième plan, et
- par un deuxième angle (β) entre l'axe central (11) de l'injecteur (1) et une projection de l'axe central du jet respectif (3) dans le premier plan,
- les jets (3) comprenant un premier, un deuxième, un troisième, un quatrième et un cinquième jet,
- le premier angle (α) du premier jet (21) se situant dans une plage angulaire de -3° à +3° et
- le deuxième angle (β) du premier jet (21) se situant dans une plage angulaire de -3° à +3° et
- le premier angle (α) du deuxième jet (22) se situant dans une plage angulaire de -40° à -20° et
- le deuxième angle (β) du deuxième jet (22) se situant dans une plage angulaire de -40° à -20° et
- le premier angle (α) du troisième jet (23) se situant dans une plage angulaire de -20° à -5° et
- le deuxième angle (β) du troisième jet (23) se situant dans une plage angulaire de -40° à -20° et
- le premier angle (α) du quatrième jet (24) se situant dans une plage angulaire de +5° à +20° et
- le deuxième angle (β) du quatrième jet (24) se situant dans une plage angulaire de -40° à -20° et
- le premier angle (α) du cinquième jet (25) se situant dans une plage angulaire de +20° à +40° et
- le deuxième angle (β) du cinquième jet (25) se situant dans une plage angulaire de -40° à -20°,
tous les jets (21-25) se situant en dehors du tracé d'une courbe de levée de soupape (5) projetée dans les plans et en dessous du tracé d'une courbe (6) du bord inférieur d'un toit de chambre de combustion (15) projetée dans les plans.

2. Procédé selon la revendication 1,
**caractérisé en ce que**
les jets (3) sont produits de telle sorte que, pour chaque paire de jets, qui est formée par deux des jets (3), un angle entre les deux axes centraux des deux jets de la paire de jets est supérieur à 15°.

3. Procédé selon l'une quelconque des revendications précédentes,
**caractérisé en ce que**
les jets (3) sont injectés dans la chambre de combustion (2) à une pression supérieure à 200 bar.

4. Procédé selon l'une quelconque des revendications précédentes,
**caractérisé en ce que**
les jets (3) sont injectés plusieurs fois dans le même cycle de travail.

5. Moteur à combustion interne (30) d'un véhicule (10) comprenant un injecteur (1) pour injecter du carburant dans une chambre de combustion (2) d'un cylindre (13) du moteur à combustion interne (30),
- l'injecteur (1) injectant du carburant dans la chambre de combustion (2) par exactement cinq trous d'un agencement de trous (4) de l'injecteur (4),
- un premier plan étant défini, dans lequel se situent à la fois l'axe central (11) de l'injecteur (1) et l'axe central (12) du cylindre (13), et
- un deuxième plan étant défini, dans lequel se situent à la fois l'axe central (11) de l'injecteur (1) et la normale au premier plan,
une direction de chacun des jets (3) étant définie
- par un premier angle (α) entre l'axe central (11) de l'injecteur (1) et une projection de l'axe central du jet respectif (3) dans le deuxième plan, et
- par un deuxième angle (β) entre l'axe central (11) de l'injecteur (1) et une projection de l'axe central du jet respectif (3) dans le premier plan,
- les jets (3) comprenant un premier, un deuxième, un troisième, un quatrième et un cinquième jet,
- le premier angle (α) du premier jet (21) se situant dans une plage angulaire de -3° à +3° et
- le deuxième angle (β) du premier jet (21) se situant dans une plage angulaire de -3° à +3° et
- le premier angle (α) du deuxième jet (22) se situant dans une plage angulaire de -40° à -20° et
- le deuxième angle (β) du deuxième jet (22) se situant dans une plage angulaire de -40° à -20° et
- le premier angle (α) du troisième jet (23) se situant dans une plage angulaire de -20° à -5° et
- le deuxième angle (β) du troisième jet (23) se situant dans une plage angulaire de -40° à -20° et
- le premier angle (α) du quatrième jet (24) se situant dans une plage angulaire de +5° à +20° et
- le deuxième angle (β) du quatrième jet (24) se situant dans une plage angulaire de -40° à -20° et
- le premier angle (α) du cinquième jet (25) se situant dans une plage angulaire de +20° à +40° et
- le deuxième angle (β) du cinquième jet (25) se situant dans une plage angulaire de -40° à -20°,
tous les jets (21-25) se situant en dehors du tracé d'une courbe de levée de soupape (5) projetée dans les plans et en dessous du tracé d'une courbe (6) du bord inférieur d'un toit de chambre de combustion (15) projetée dans les plans.

6. Moteur à combustion interne (30) selon la revendication 5, **caractérisé en ce qu'**une direction de l'axe central de chacun des trous détermine une direction de l'axe central du jet pouvant être produit par le trou.

7. Véhicule (10) comprenant un moteur à combustion interne (30) selon la revendication 5 ou la revendication 6.
